# EUROPEAN PATENT APPLICATION

(11) **EP 4 521 758 A1**
(43) Date of publication of application: **12.03.2025**
(21) Application number: 22942803.2
(22) Date of filing: 17.05.2022
(51) Int. Cl.: H04N 21/438, H04N 21/431, H04N 21/482, H04N 21/422

(54) **DISPLAY DEVICE AND CONTROL METHOD THEREOF**

(71) Applicant: LG Electronics Inc., Yeongdeungpo-gu Seoul 07336 (KR)
(72) Inventor: LEE, Jaehee, Seoul 06772 (KR)
(74) Representative: Schornack, Oliver
(86) International application number: PCT/KR2022/007042
(87) International publication number: WO 2023/224139

(57) **Abstract**

One embodiment of the present invention provides a method for controlling a display device, comprising the steps of: outputting first content provider (CP) content provided from a CP; receiving a first control signal while the first CP content is being outputted; and allocating the first CP content to a first channel from among broadcast channels of the display device on the basis of the first control signal.

## Description

### TECHNICAL FIELD

The present disclosure relates to a display device for providing content to a user

### BACKGROUND ART

With the increasing development of information society, the demand for display devices is also increasing in various forms. In response to this trend, various display devices, for example, Liquid Crystal Display (LCD), Field Emission Display (FED), Plasma Display Panel (PDP), an electroluminescent device, etc. have recently been developed.

A liquid crystal panel of the LCD may include a liquid crystal layer, may further include a thin film transistor (TFT) substrate and a color filter substrate that are arranged to face each other on the basis of the liquid crystal panel interposed therebetween, and may display an image using light provided from a backlight unit.

As an example of an electroluminescent device, active-matrix-type organic light emitting display (OLED) devices are commercially available on the market and widely used throughout the world. Since the OLED device is a self-emitting device, the OLED device has no backlight and is advantageous in terms of a response speed and a viewing angle as compared to the LCD, so that the OLED devices are attracting attention as next-generation displays.

In addition, recently, users are increasingly watching content provided by content providers (hereinafter, CPs) as well as content received through broadcast receivers.

However, in order to watch content provided by CPs, users need to access CP platforms each time to search for and play content, which is inconvenient.

### DISCLOSURE

### TECHNICAL TASK

The present disclosure is to address the above-mentioned problems and/or disadvantages, and an object of the present disclosure is to provide a display device that assigns a channel to content provided by a CP and a control method thereof.

### TECHNICAL SOLUTIONS

In an aspect of the present disclosure, a method of controlling a display device includes outputting first content provider (CP) content provided from a CP, receiving a first control signal while the first CP content is being output, and assigning the first CP content to a first channel from among broadcast channels of the display device on the basis of the first control signal.

Furthermore, the method may include assigning second CP content related to the first CP content to a second channel from among the broadcast channels after assigning the first CP content to the first channel, wherein the second channel is related to the first channel.

Furthermore, the method may include outputting a modal dialog for assigning third CP content related to the first CP content to a third channel from among the broadcast channels if the third CP content is present, wherein the third channel is related to the first channel.

Furthermore, the method may include receiving a number of automatically recommended channel allocations from a user, and assigning at least one CP content related to the first CP content to a channel related to the first channel from among the broadcast channels on the basis of the number of automatically recommended channel allocations after assigning the first CP content to the first channel.

Furthermore, the method may include receiving a second control signal for selecting the first channel from a remote controller after assigning the first CP content to the first channel, outputting the first CP content on the basis of the second control signal, and outputting a recommended content list including at least one piece of content related to the first CP content while the first CP content is being output.

Furthermore, the method may include assigning the second CP content to the first channel or deleting the second channel if the second CP content assigned to the second channel satisfies a first condition, wherein the first condition includes a case in which a user has not viewed the second CP content for a first period and a case in which the second CP content has not been updated for a second period.

Furthermore, the method may include receiving a third control signal for selecting the first channel from the remote controller after assigning the first CP content to the first channel, playing the first CP content in full screen if there is a remaining playback time of the first CP content assigned to the first channel, and outputting a home screen of the content provider when there is no remaining playback time of the first CP content assigned to the first channel.

Furthermore, the first control signal may be a first pattern received from the remote controller.

Furthermore, the first control signal may be a signal used for a user to select a first button provided by the content provider.

In another aspect of the present disclosure, a display device includes a communication unit configured to communicate with a remote controller, a display module configured to output content, and a controller, wherein the controller is configured to output a first CP content provided from a content provider (CP) through the display module, receive a first control signal from the remote controller while the first CP content is being output, and assign the first CP content to a first channel from among broadcast channels of the display device on the basis of the first control signal.

### ADVANTAGEOUS EFFECTS

The display device of the present disclosure can more easily play content provided by a content provider, thereby improving the convenience of a user using the display device.

Effects that may be obtained from the present disclosure are not limited to the effects mentioned above, and other effects not mentioned are able to be clearly understood by those skilled in the art in the technical field to which the present disclosure belongs from a description below.

### DESCRIPTION OF DRAWINGS

FIG. 1 is a block diagram illustrating constituent elements of a display device according to an embodiment of the present disclosure.
FIG. 2 is a diagram illustrating an embodiment of assigning CP content to a broadcast channel in a display device according to an embodiment of the present disclosure.
FIG. 3 is a diagram illustrating another embodiment of assigning CP content to a broadcast channel in the display device according to an embodiment of the present disclosure.
FIG. 4 is a diagram illustrating an embodiment of automatically assigning CP content to a broadcast channel in the display device according to an embodiment of the present disclosure.
FIG. 5 is a diagram illustrating an embodiment of automatically assigning CP content to a broadcast channel in the display device according to an embodiment of the present disclosure.
FIG. 6 is a diagram illustrating an embodiment of switching channels in the display device according to an embodiment of the present disclosure.
FIG. 7 is a diagram illustrating an embodiment of outputting a recommended content list in the display device according to an embodiment of the present disclosure.
FIG. 8 is a diagram illustrating an embodiment of deleting or merging channels to which CP content has been assigned in the display device according to an embodiment of the present disclosure.
FIG. 9 is a diagram illustrating an embodiment of playing CP content in the display device according to an embodiment of the present disclosure.
FIG. 10 is a flowchart illustrating an embodiment of assigning CP content to a broadcast channel in the display device according to an embodiment of the present disclosure.

### BEST MODE FOR DISCLOSURE

Description will now be given in detail according to exemplary embodiments disclosed herein, with reference to the accompanying drawings. For the sake of brief description with reference to the drawings, the same or equivalent components may be provided with the same reference numbers, and description thereof will not be repeated. In general, a suffix such as "module" and "unit" may be used to refer to elements or components. Use of such a suffix herein is merely intended to facilitate description of the specification, and the suffix itself is not intended to give any special meaning or function. In the present disclosure, that which is well-known to one of ordinary skill in the relevant art has generally been omitted for the sake of brevity. The accompanying drawings are used to help easily understand various technical features and it should be understood that the embodiments presented herein are not limited by the accompanying drawings. As such, the present disclosure should be construed to extend to any alterations, equivalents and substitutes in addition to those which are particularly set out in the accompanying drawings.

It will be understood that although the terms first, second, etc. may be used herein to describe various elements, these elements should not be limited by these terms. These terms are generally only used to distinguish one element from another.

It will be understood that when an element is referred to as being "connected with" another element, the element can be directly connected with the other element or intervening elements may also be present. In contrast, when an element is referred to as being "directly connected with" another element, there are no intervening elements present.

A singular representation may include a plural representation unless it represents a definitely different meaning from the context.

Terms such as "include" or "has" are used herein and should be understood that they are intended to indicate an existence of several components, functions or steps, disclosed in the specification, and it is also understood that greater or fewer components, functions, or steps may likewise be utilized.

On the other hand, the image display device described herein is, for example, an intelligent image display device implemented by adding a computer support function to a broadcast reception function, and further includes an Internet function or the like while sufficiently performing the broadcast reception function, so that the image display device may have user-friendly interfaces such as a handwriting input device, a touchscreen, or a spatial remote controller. Further, the image display device can support a wired or wireless Internet function by connecting to the Internet and a computer device, thereby performing e-mailing, web browsing, banking, or gaming. To implement these functions, the image display device may operate based on a standard general-purpose Operating System (OS).

Accordingly, the image display device according to the present disclosure is designed in a manner that various applications can be easily added to or deleted from a general-purpose OS kernel so that the image display device can perform various user-friendly functions. The image display device may be, for example, a network TV, a Hybrid broadcast broadband TV (HBBTV), a smart TV, etc. The image display device is applicable to a smartphone as needed.

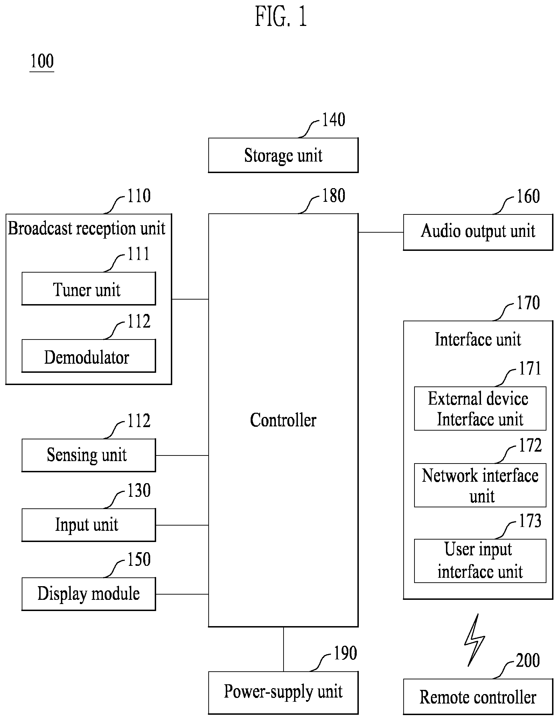

FIG. 1 is a block diagram illustrating constituent elements of a display device 100 according to an embodiment of the present disclosure.

Referring to FIG. 1, the display device 100 may include a broadcast reception unit 110, an external device interface unit 171, a network interface unit 172, a storage unit 140, a user input interface unit 173, an input unit 130, a controller 180, a display 150, an audio output unit 160, and/or a power-supply unit 190.

The broadcast reception unit 110 may include a tuner unit 111 and a demodulator 112.

Although not shown in the drawings, the display device 100 may include only the external device interface unit 171 and the network interface unit 172 from among the broadcast reception unit 110, the external device interface unit 171, and the network interface unit 172. That is, the display device 100 may not include the broadcast reception unit 110.

The tuner unit 111 may select a broadcast signal corresponding to either a user-selected channel or all prestored channels from among broadcast signals received through an antenna (not shown) or a cable (not shown). The tuner unit 111 may convert the selected broadcast signal into an intermediate frequency (IF) signal or a baseband image or a voice signal.

For example, when the selected broadcast signal is a digital broadcast signal, the tuner unit 111 may convert the selected broadcast signal into a digital IF (DIF) signal. When the selected broadcast signal is an analog broadcast signal, the tuner unit 111 may convert the selected broadcast signal into an analog baseband image or a voice signal (CVBS/SIF). That is, the tuner unit 111 may process the digital broadcast signal or the analog broadcast signal. The analog baseband image or the voice signal (CVBS/SIF) output from the tuner unit 111 may be directly input to the controller 180.

The tuner unit 111 may sequentially select broadcasting signals of all broadcasting channels stored through a channel memory function from among the received broadcast signals, and may convert the selected broadcast signal into an intermediate frequency (IF) signal or a baseband image or a voice signal.

The tuner unit 111 may include a plurality of tuners to receive broadcast signals of the plurality of channels. Alternatively, a single tuner for simultaneously receiving broadcast signals of the plurality of channels is also possible.

The demodulator 112 may receive the digital IF signal (DIF) converted by the tuner unit 111, and may thus perform demodulation of the received signal. The demodulator 112 may perform demodulation and channel decoding, and may output a stream signal (TS). The stream signal may be a signal formed by multiplexing an image signal, a voice signal, or a data signal.

The stream signal (TS) output from the demodulator 112 may be input to the controller 180. The controller 180 may perform demultiplexing, image/audio signal processing, etc., may output an image through the display 150, and may output a voice through the audio output unit 160.

The sensing unit 120 may sense a change in the display device 100 or may sense an external change. For example, the sensing unit 120 may include a proximity sensor, an illumination sensor, a touch sensor, an infrared (IR) sensor, an ultrasonic sensor, an optical sensor (e.g., a camera), a voice sensor (e.g., a microphone), a battery gauge, environmental sensors (e.g., hygrometer, a thermometer, etc.).

The controller 180 may check a state of the display device 100 based on information collected by the sensing unit 120, may notify the user of a problem, or may control the display device 100 to be kept in the best state.

In addition, it is possible to provide an optimal viewing environment by differently controlling the content, image quality, size, etc. of the image provided to the display module 180 depending on the viewer, ambient illuminance, etc. sensed by the sensing unit. As the smart TV has evolved, the number of functions mounted in the display device increases, and the number of the sensing units 20 also increases together with the increasing functions.

The input unit 130 may be provided at one side of a main body of the display device 100. For example, the input unit 130 may include a touch pad, a physical button, and the like. The input unit 130 may receive various user commands related to the operation of the display device 100, and may transmit a control signal corresponding to the input command to the controller 180.

Recently, as a bezel of the display device 100 decreases in size, the number of display devices 100 each including a minimum number of input unit 130 formed in a physical button exposed to the outside is rapidly increasing. Instead, a minimum number of physical buttons may be provided on the back or side surface of the display device 100. The display device may receive a user input through the remote controller 200 through a touchpad or a user input interface unit 173 to be described later.

The storage unit 140 may store a program for processing and controlling each signal used in the controller 180, and may store a signal-processed image, a voice, or a data signal. For example, the storage unit 140 may store application programs designed for the purpose of performing various tasks that can be processed by the controller 180, and may selectively provide some of the stored application programs upon request of the controller 180.

The program stored in the storage unit 140 is not specifically limited to being executed by the controller 180. The storage unit 140 may perform a function for temporarily storing an image, a voice, or a data signal received from an external device through the external device interface unit 171. The storage unit 140 may store information about a predetermined broadcast channel through a channel memory function such as a channel map.

Although the storage unit 140 of FIG. 1 is provided separately from the controller 180, the scope of the present disclosure is not limited thereto, and the storage unit 140 may also be included in the controller 180 as needed.

The storage unit 140 may include at least one of a volatile memory (e.g., DRAM, SRAM, SDRAM, etc.) and a non-volatile memory (e.g., flash memory, hard disk drive (HDD), solid state drive (SSD), etc.).

The display 150 may generate a drive signal by converting an image signal, a data signal, an OSD signal, a control signal processed by the controller 180, or by converting an image signal, a data signal, a control signal, etc. received from the interface unit 171. The display 150 may include a display panel 181 having a plurality of pixels.

A plurality of pixels included in the display panel may include RGB sub-pixels. Alternatively, a plurality of pixels included in the display panel may include sub-pixels of RGBW. The display 150 may convert the image signal, the data signal, the OSD signal, the control signal, etc. processed by the controller 180 to generate a drive signal for the plurality of pixels.

The display 150 may be implemented as a plasma display panel (PDP), a liquid crystal display (LCD), an organic light emitting diode (OLED), a flexible display, etc. In addition, the display 150 may also be implemented as a three-dimensional (3D) display. The three-dimensional (3D) display 150 may be classified into a glassless-type 3D display and a glasses-type 3D display.

The display device may include a display module that occupies most parts of the front surface, and a case that covers the back and side surfaces of the display module and packages the display module.

Recently, the display device 100 has evolved from a flat-screen display to a curved-screen display. In order to implement the curved screen, the display device 100 may use a display module 150 that can be bent or curved, such as a light emitting diode (LED) or an organic light emitting diode (OLED), etc.

Conventionally, the LCD has difficulty in self-emitting light, so that the conventional LCD has been designed to receive light through a backlight unit. The backlight unit is a device for uniformly supplying light received from a light source to a liquid crystal located on the front surface of the display device. As the backlight becomes thinner, a thin LCD can be implemented. However, it is actually difficult for the backlight unit to be implemented as a curved structure formed of a flexible material. Although the backlight unit is implemented as a curved shape, it is difficult for light to be uniformly applied to the liquid crystal, thereby changing brightness of the screen.

On the other hand, the LED or the OLED is designed in a manner that each of constituent elements constructing the pixels can self-emit light without using the backlight unit, so that the LED or the OLED can be implemented as a curved shape without any problems. In addition, since each element can perform self-emission of light, brightness of each element is not affected by a change in the positional relationship between the element and adjacent elements, so that a curved display module 150 can be implemented as an LED or OLED.

OLED (Organic Light Emitting Diode) panels appeared in earnest in mid-2010 and are rapidly replacing LCDs in the small- and medium-sized display market. The OLED is a display made using the self-emission characteristics in which OLED emits light when a current flows in a fluorescent organic compound. Since the response speed of the OLED is faster than that of the LCD, there is little afterimage when moving images are implemented

OLEDs may be used as a light-emitting display product. In this case, the light-emitting display device may use three fluorescent organic compounds (such as red, green, and blue) each having a self-emitting function, and may use the self-emitting phenomenon in which positive(+)-charged particles and electrons injected from a cathode and anode are combined with each other within the organic material, so that a backlight unit causing degradation of color sense need not be used.

The LED panel is implemented by technology for using only one LED element as one pixel, and has a smaller LED element compared to the prior art, so that a curved display module 150 can be implemented. Whereas the conventional device referred to as an LED TV can use the LED as a light source of the backlight unit for supplying light to the LCD, it is impossible for the LED of the conventional device to constitute a screen.

The display module may include a display panel, a coupling magnet located on the rear surface of the display panel, a first power-supply unit, and a first signal module. The display panel may include a plurality of pixels (R, G, B). The plurality of pixels (R, G, B) may be formed in each region where a plurality of data lines and a plurality of gate lines cross each other. The plurality of pixels (R, G, B) may be arranged in a matrix.

For example, the plurality of pixels (R, G, B) may include a red(R) sub-pixel, a green(G) sub-pixel, and a blue(B) sub-pixel. The plurality of pixels (R, G, B) may further include white (W) sub-pixel(s).

In the display module 150, one side where an image is displayed may be referred to as a front side or a front surface. When the display module 150 displays an image, one side where no image is observed may be referred to as a rear side or a rear surface.

Meanwhile, the display 150 may be implemented as a touchscreen, so that the display 150 can also be used as an input device in addition to an output device.

The audio output unit 160 may receive a voice-processed signal from the controller 180, and may output the received signal as a voice signal.

The interface unit 170 may serve as a path of connection to various kinds of external devices connected to the display device 100. The interface unit may include not only a wired method for transmitting/receiving data through a cable, but also a wireless method using the antenna.

The interface unit 170 may include at least one of a wired/wireless headset port, an external charger port, a wired/wireless data port, a memory card port, a port connected to a device having an identification module, an audio input/output (I/O) port, a video I/O port, and an earphone port.

As an example of a wireless method, the above-described broadcast reception unit 110 may be used. The broadcast reception unit 110 may be configured to use a broadcast signal, a mobile communication short-range communication signal, a wireless Internet signal, and the like.

The external device interface unit 171 may transmit or receive data to and from a connected external device. To this end, the external device interface unit 171 may include an A/V input/output (I/O) unit (not shown).

The external device interface unit 171 may be wired or wirelessly connected to an external device such as a digital versatile disc (DVD) player, a Blu-ray player, a game console, a camera, a camcorder, a computer (laptop), a set-top box, or the like, and may perform an input/output (I/O) operation with the external device.

In addition, the external device interface unit 171 may establish a communication network with various remote controllers 200, may receive a control signal related to operation of the display device 100 from the remote controller 200, or may transmit data related to operation of the display device 100 to the remote controller 200.

The external device interface unit 171 may include a wireless communication unit (not shown) for short-range wireless communication with other electronic devices. Through the wireless communication unit (not shown), the external device interface unit 171 may exchange data with an adjacent mobile terminal. In particular, the external device interface unit 171 may receive device information, application information, an application image, and the like from the mobile terminal in a mirroring mode.

The network interface unit 172 may provide an interface for connecting the display device 100 to a wired/wireless network including the Internet network. For example, the network interface unit 172 may receive content or data provided by the Internet, a content provider, or a network administrator through a network. The network interface unit 172 may include a communication module (not shown) for connection with the wired/wireless network.

The external device interface unit 171 and/or the network interface unit 172 may include a communication module for short-range communication such as Wi-Fi, Bluetooth, Bluetooth low energy (BLE), ZigBee, Near Field Communication (NFC), and a communication module for cellular communication such as Long-Term Evolution (LTE), LTE-A (LTE Advanced), Code Division Multiple Access (CDMA), WCDMA (wideband CDMA), UMTS (universal mobile telecommunications system), WiBro (Wireless Broadband), etc.

The user input interface unit 173 may transmit user input signals to the controller 180, or may transmit signals received from the controller 180 to the user. For example, the user input interface unit 173 may transmit or receive user input signals (such as a power-on/off signal, a channel selection signal, and a screen setting signal) to and from the remote controller 200, may transmit user input signals received through a local key (not shown) such as a power key, a channel key, a volume key, and a setting key to the controller 180, may transmit a user input signal received by a sensor unit (not shown) for sensing a user gesture to the controller 180, or may transmit a signal received from the controller 180 to the sensor unit.

The controller 180 may include at least one processor, and may control the overall operation of the display device 100 using the processor included therein. Here, the processor may be a general processor such as a CPU. Of course, the processor may be a dedicated device such as an ASIC, or other hardware-based processor.

The controller 180 may demultiplex the stream received through the tuner unit 111, the demodulator 112, the external device interface unit 171, or the network interface 172, and may process the demultiplexed signals to generate and output a signal for image or voice output.

The image signal processed by the controller 180 may be input to the display 150 and displayed as an image corresponding to the corresponding image signal. In addition, the image signal processed by the controller 180 may be input to the external output device through the external device interface unit 171.

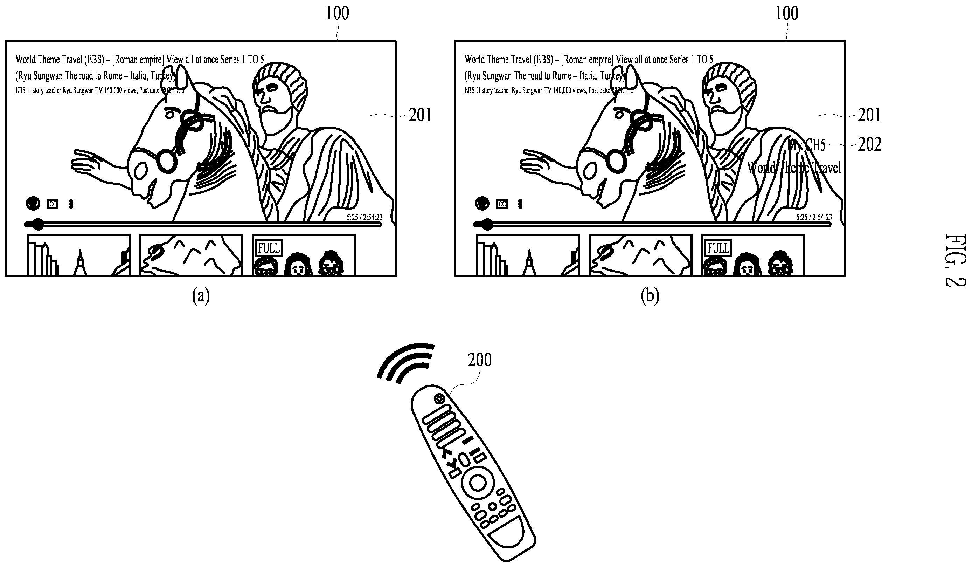

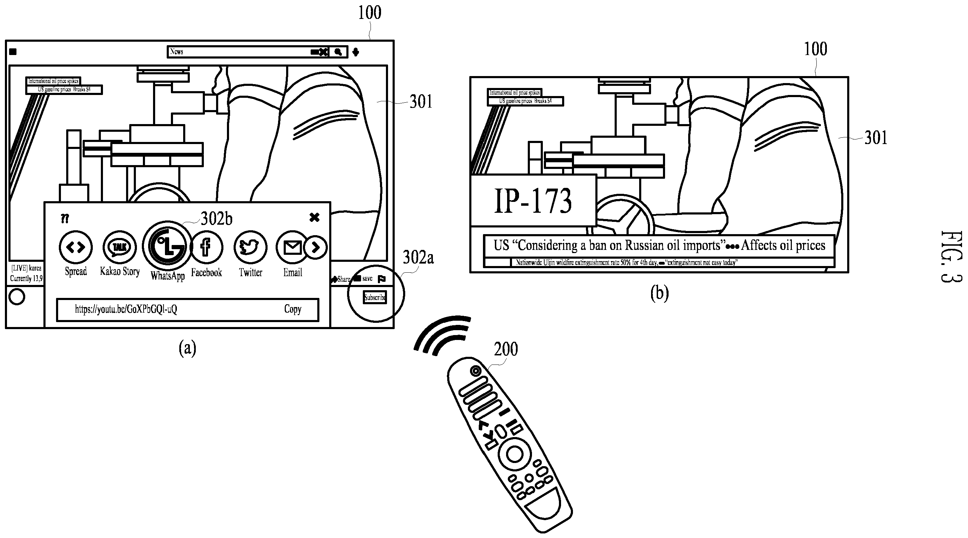

The voice (or audio) signal processed by the controller 180 may be audibly output to the audio output unit 160. In addition, the voice signal processed by the controller 180 may be input to the external output device through the external device interface unit 171. Although not shown in FIG. 2, the controller 180 may include a demultiplexer, an image processor, and the like, and a detailed description thereof will hereinafter be described with reference to FIG. 3.

In addition, the controller 180 may control the overall operation of the display device 100. For example, the controller 180 may control the tuner unit 111 to select a broadcast program corresponding to either a user-selected channel or a prestored channel.

In addition, the controller 180 may control the display device 100 by a user command or an internal program received through the user input interface unit 173. The controller 180 may control the display 150 to display an image. In this case, the image displayed on the display 150 may be a still image or a moving image, and may be a 2D image or a 3D image.

On the other hand, the controller 180 may display a predetermined 2D object in the image displayed on the display 150. For example, the object may be at least one of a connected web screen (newspaper, magazine, etc.), electronic program guide (EPG), various menus, widgets, icons, still images, moving images, and text.

Meanwhile, the controller 180 may modulate and/or demodulate the signal using an amplitude shift keying (ASK) scheme. Here, the ASK scheme may refer to a method for modulating a signal by differentiating the amplitude of a carrier wave according to data values or for restoring an analog signal to a digital data value according to the amplitude of the carrier wave.

For example, the controller 180 may modulate an image signal using the ASK scheme, and may transmit the modulated signal through a wireless communication module.

For example, the controller 180 may demodulate and process the image signal received through the wireless communication module using the ASK scheme.

Accordingly, the display device 100 may simply transmit and receive signals to and from other image display devices arranged adjacent to each other without using either a unique identifier such as a Media Access Control (MAC) address or a complex communication protocol such as TCP/IP.

On the other hand, the display device 100 may further include a photographing unit (not shown). The photographing unit may photograph a user. The photographing unit may be implemented as one camera, but is not limited thereto, and may be implemented by a plurality of cameras. On the other hand, the photographing unit may be embedded in the display device 100 or may be separately arranged on the display 150. The image information photographed by the photographing unit may be input to the controller 180.

The controller 180 may recognize the position of the user based on the image photographed by the photographing unit. For example, the controller 180 may recognize a distance (z-axis coordinates) between the user and the display device 100. In addition, the controller 180 may recognize the X-axis coordinate and the Y-axis coordinate within the display 150 corresponding to the user position.

The controller 180 may sense a user gesture based on an image photographed by the photographing unit, each of signals detected by the sensor unit, or a combination thereof.

The power-supply unit 190 may supply corresponding power to the display device 100. In particular, the controller 180 may be implemented as a System on Chip (SoC), a display 150 for displaying an image, and an audio output unit 160 for audio output.

Specifically, the power-supply unit 190 may include a converter (not shown) for converting AC power into DC power, and a DC/DC converter (not shown) for converting the level of DC power.

On the other hand, the power-supply unit 190 may receive power from the external power source, and may distribute the received power to the respective components. The power-supply unit 190 may be directly connected to the external power source to supply AC power, and may include a battery capable of being charged with electricity.

In the former case, the power-supply unit 190 may be used by connecting to a wired cable, and it is difficult for the power-supply unit 190 to move from one place to another place, and the movement range of the power-supply unit 190 is limited. In the latter case, the power-supply unit 190 can move from one place to another place, but the weight and volume of the power-supply unit 190 may increase as much as the weight and volume of the battery. In addition, for charging, the power-supply unit 190 should be directly connected to a power cable for a predetermined period of time or should be coupled to a charging cradle (not shown) for power supply.

The charging cradle may be connected to the display device through a terminal exposed to the outside. Alternatively, if the power-supply unit 190 approaches the charging cradle using a wireless interface, a built-in battery of the power-supply unit 190 may also be charged with electricity.

The remote controller 200 may transmit a user input to the user input interface unit 173. To this end, the remote controller 200 may use Bluetooth, Radio Frequency (RF) communication, infrared (IR) communication, Ultra-Wideband (UWB), ZigBee, or the like. In addition, the remote controller 200 may receive the image, voice, or data signal output from the user input interface unit 173, and may display or audibly output the received image, voice, or data signal.

On the other hand, the above-described display device 100 may be a fixed or mobile digital broadcast receiver capable of receiving digital broadcast signals.

Meanwhile, the block diagram of the display device 100 shown in FIG. 1 is disclosed for only for illustrative purposes for one embodiment of the present disclosure, and the respective components of the display device 100 shown in FIG. 1 can be integrated, added or omitted according to the specifications of the digital device 100 which is actually implemented.

That is, if necessary, two or more components may be combined into one component, or one component may be subdivided into two or more components. In addition, the functions performed in each block are intended to explain the embodiment of the present disclosure, and the specific operation or device does not limit the scope of the present disclosure.

Broadcasting service platforms include IPTV and CATV, and there are program providers (PPs) that provide real-time broadcast content. In addition, there are content providers (CPs) that operate platforms and provide content, such as Netflix and YouTube. Hereinafter, content provided by content providers such as Netflix and YouTube is referred to as CP content.

Recently commercialized display devices can output CP content received from content providers through a network separately from outputting content provided from broadcasting service platforms through broadcast receivers.

However, in the past, users had to go through the following steps to view content provided by content providers (CPs) through TV.

Users press the home key, select a desired CP icon, and search for and play desired content within a CP platform when the CP platform is executed.

Since various CPs provide content recently, users may have needs to select content provided by CPs like selecting broadcast channels on TV.

To this end, the present disclosure proposes a method of assigning content provided by CPs to TV channels and allowing users to directly view the content using an up key, a down key, and number keys for the TV channels.

An embodiment of the present disclosure to solve the above-described problems will be described with reference to FIG. 2 to FIG. 9.

However, for the convenience of description, each component of the above-described display device 100 is not illustrated in the drawing, and only the display module of the display device 100 is illustrated. The actual operation performed by the display device 100 is performed by the above-described controller but is described as being performed by the display device 100.

FIG. 2 is a diagram illustrating an embodiment of assigning CP content to a broadcast channel in the display device according to an embodiment of the present disclosure. Hereinafter, redundant description will be omitted.

Referring to (a) of FIG. 2, the display device 100 may output CP content 201 provided from a content provider through the display module.

In an embodiment, the display device 100 may receive a control signal from the remote controller 200 while the CP content 201 is being output. Here, the control signal may correspond to a specific pattern received from the remote controller 200. For example, a user may select a preset button of the remote controller 200. Additionally, the user may input a gesture of turning the pointer or cursor of the remote controller 200 once.

Referring to (b) of FIG. 2, the display device 100 may assign the CP content 201 to a first channel 202 among broadcast channels of the display device 100 on the basis of the control signal.

More specifically, the display device 100 has assigned a broadcast channel corresponding to content received through the broadcast receiver. In one embodiment of the present disclosure, in addition to the existing broadcast channels, the CP content 201 may be assigned to the first channel 202, which is an empty channel among the broadcast channels.

That is, when the existing broadcast channels are assigned from 1ch to 100ch, the display device 100 may assign the CP content 201 to 101ch based on the control signal. At this time, the display device 100 may output information on the assigned channel.

In addition, in an embodiment of the present disclosure, the display device 100 may assign the CP content 201 to the first channel 202 when the user turns off the display device 100 while watching the CP content 201 even if the display device 100 does not manually register the CP content 201 on the basis of a control signal.

Accordingly, when the user turns on the display device 100 again, the CP content 201 assigned to the first channel 202 can be output instead of one of the existing broadcast channels.

FIG. 3 is a diagram illustrating another embodiment of assigning CP content to a broadcast channel in the display device according to an embodiment of the present disclosure. Hereinafter, redundant description will be omitted.

Referring to (a) of FIG. 3, the display device 100 may output CP content 301 provided from a content provider through the display module.

In an embodiment, the display device 100 may receive a first control signal from the remote controller 200 while the CP content 301 is being output. Here, unlike the embodiment of FIG. 2, the first control signal corresponds to a signal for selecting a first button 302a provided by the content provider. Here, the first button 302a provided by the content provider may be described differently as a subscription button, a like button, a follow button, etc., but indicates the preference of the user for the CP content 301.

In addition, in another embodiment, the display device 100 may receive a second control signal from the remote controller 200 while the CP content 301 is being output. Here, the second control signal corresponds to a signal for selecting a second button 302b provided by the content provider. Here, the second button 302b corresponds to a share button for the CP content 301 provided by the content provider. That is, when the user selects the share button for the CP content 301, the display device 100 can determine that the user intends to assign the CP content 301 to a broadcast channel.

Referring to (b) of FIG. 3, the display device 100 may assign the CP content 301 to a first channel 303 among the broadcast channels of the display device 100 on the basis of a control signal. At this time, the display device 100 may output text corresponding to the assigned first channel 303 by overlaying the same on the CP content 301.

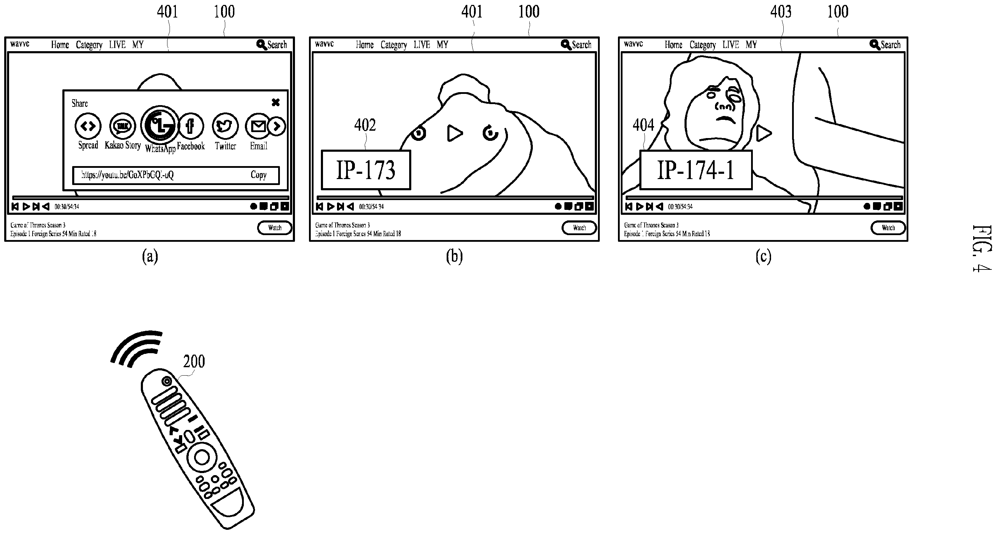

FIG. 4 is a diagram illustrating an embodiment of automatically assigning CP content to a broadcast channel in the display device according to an embodiment of the present disclosure. Hereinafter, redundant description will be omitted.

In an embodiment of the present disclosure, the display device 100 may assign first CP content to the first channel and then assign second CP content related to the first CP content to a second channel among the broadcast channels. Here, the second channel is related to the first channel.

More specifically, (a) and (b) of FIG. 4 are the same as (a) and (b) of FIG. 3. That is, the display device 100 may assign the first CP content 401 to the first channel (e.g., IP-174, 402).

Referring to (c) of FIG. 4, the display device 100 may assign the second CP content 403 related to the first CP content 401 to the second channel 404 after assigning the first CP content 401 to the first channel 402. Here, if the first CP content 401 is series content, the second CP content 403 may be naturally determined as the next series of the first CP content 401.

In addition, the second channel 404 corresponds to a number similar to the number of the first channel 402. For example, if the first channel 402 is IP-174, the second channel 404 may be IP-174-1. Here, the channel number of the first channel 402 may be arbitrarily assigned, but if the second CP content 403 is content related to the first CP content 401, the second channel 404 can be assigned a number similar to that of the first channel 402.

Although not shown in the figure, the channel number of the first channel 402 may be set directly by the user or set to one of the random or specific number bands, and may be changed by additional settings after being assigned.

Further, although not shown in the figure, the display device 100 may output a modal dialog for assigning third CP content to a third channel among the broadcast channels when the third CP content (not shown) related to the first CP content 401 is present. Here, the third channel is a channel related to the first channel like the second channel. That is, the display device 100 may output a modal dialog to ask the user whether to assign a channel, in addition to the embodiment of automatically registering related CP content to a broadcast channel.

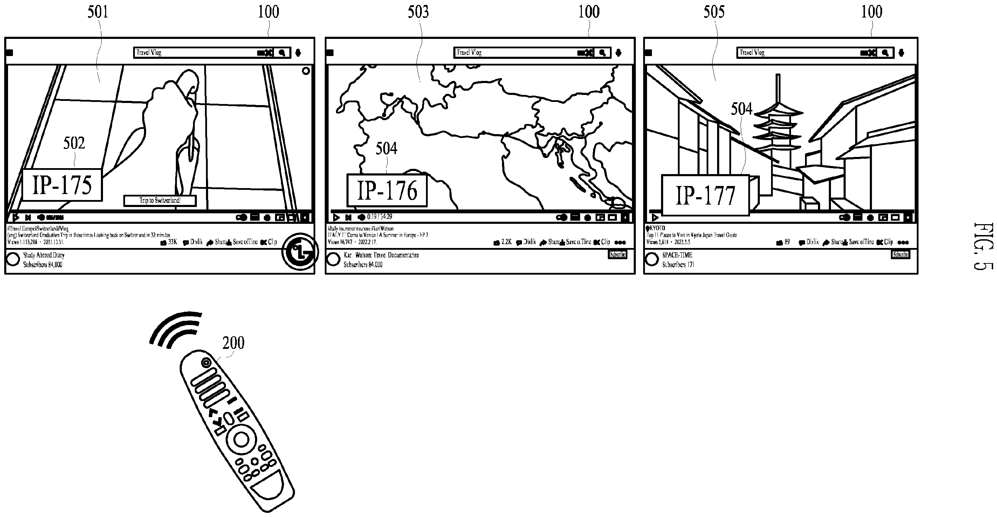

FIG. 5 is a diagram illustrating an embodiment of automatically assigning CP content to a broadcast channel in the display device according to an embodiment of the present disclosure. Hereinafter, redundant description will be omitted.

In an embodiment of the present disclosure, the display device 100 may receive a number of automatically recommended channel allocations from the user. For example, the user may set two automatically recommended channel allocations through a setting menu. In this case, since FIG. 5 shows an example of a case in which the number of automatically recommended channel allocations is set to two, the second CP content 503 and the third CP content 505 are illustrated as content related to the first CP content 501, but the number of automatically recommended channel allocations can be any number.

In this case, after assigning the first CP content 501 to the first channel 502, the display device 100 may assign at least one CP content 503 and 504 related to the first CP content 501 to the second channel 505 and the third channel 506, which are related to the first channel 502, on the basis of the number of automatically recommended channel allocations.

Referring to FIG. 5, when the first CP content 501 is Swiss travel content provided by YouTube, the user may assign the first CP content 501 to the first channel 502 (for example, IP-175).

In an embodiment, the display device 100 may receive information on other CP content related to or similar to the first CP content 501 from the content provider. Accordingly, the display device 100 may assign the second CP content 503 to the second channel 504 (for example, IP-176) and assign the third CP content 505 to the third channel 506 (for example, IP-177). In this case, the display device 100 may randomly assign numbers associated with the first channel 502 to the second channel 504 and the third channel 506 may be randomly assigned by the display device 100 or recommend numbers to the user such that the user directly inputs the numbers for the second channel 504 and the third channel 506.

Referring to the above-described example, if the first CP content 501 is Swiss travel content provided by YouTube, the second CP content 503 may be Italian travel content provided by YouTube, and the third CP content 505 may be Japanese travel content provided by YouTube.

In another embodiment, the display device 100 may assign CP content related the first CP content 501 from multiple types of content providers rather than a single content provider to channels. For example, if the first CP content 501 is Swiss travel content provided by YouTube, the second CP content 503 may be other Swiss travel content provided by Netflix, and the third CP content 505 may be other Swiss travel content provided by another content provider.

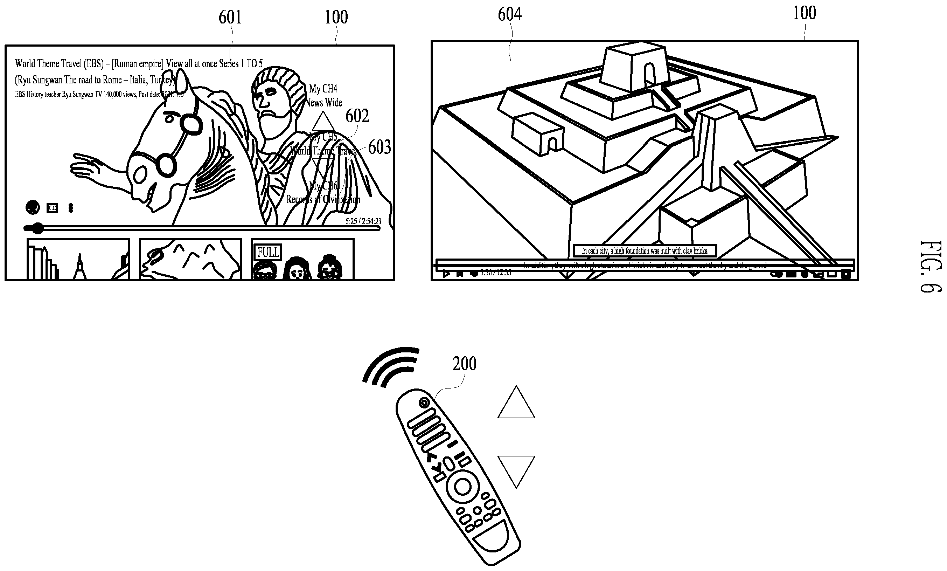

FIG. 6 is a diagram illustrating an embodiment of switching channels in the display device according to an embodiment of the present disclosure. Hereinafter, redundant description will be omitted.

Referring to FIG. 6, after assigning first CP content 601 to a first channel 602, the display device 100 may receive a control signal for selecting the first channel 602 from the remote controller 200.

Accordingly, the display device 100 can output the first CP content 601 through the display module.

While the first CP content 601 is being output, a control signal requesting channel change may be received from the remote controller 200. For example, the user may press a channel up key or down key of the remote controller 200 to select another channel. Accordingly, the display device 100 can output content being output on the other channel.

For example, when a control signal for selecting the channel down-key is received from the remote controller 200, the display device 100 may output the second content 604 being output on a second channel 603 which is a channel below the first channel 602.

In an embodiment, the second content 604 may be CP content related to the first CP content 601, broadcast content related to the first CP content 601, or content unrelated to the first CP content 601.

More specifically, when the first CP content 601 is assigned to the first channel 602 through the above-described embodiment, the display device 100 may automatically assign CP content related to the first CP content 601 to a channel related to the first channel 602. In this case, the second CP content 604 may be assigned to the second channel 603.

However, in another embodiment, when the first CP content 601 is assigned to the first channel 602, the first channel 602 may be set to a channel related to general broadcast content if the first CP content 601 is related to general broadcast content other than CP content. For example, the second channel 603 may correspond to ch 6 as a historical content channel among the existing broadcast content channels. At this time, if the first CP content 601 is CP content related to history, the display device 100 may set the first channel 602 to which the first CP content 601 is assigned to ch 5 near ch 6. Accordingly, the newly assigned first CP content 601 is assigned to ch 5 because it is CP content related to history, and history content, which is existing broadcast content, is assigned to ch 6, and thus the user may view the CP content and the history content in succession using the remote controller 200.

In another embodiment, the display device 100 may output the second CP content 604 according to a channel change request signal while the user is viewing the first CP content 601. At this time, if the user requests channel change to another channel within a first time (e.g., 3 seconds) while the second CP content 604 is being output, the display device 100 can ascertain that the user is not interested in the second CP content 604. In this case, the display device 100 may not assign the second CP content 604 to the second channel 603.

That is, the display device 100 may determine whether to maintain or delete channel allocation additional feedback from the user.

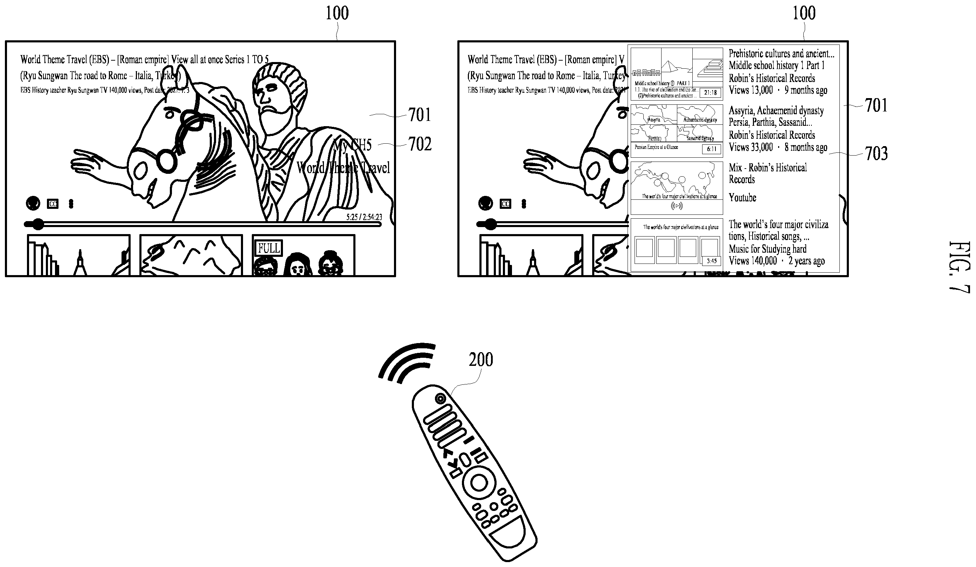

FIG. 7 is a diagram illustrating an embodiment of outputting a recommended content list in the display device according to an embodiment of the present disclosure. Hereinafter, redundant description will be omitted.

The display device 100 may assign first CP content 701 to a first channel 702 as described above.

In an embodiment of the present disclosure, the display device 100 may assign the first CP content 701 to the first channel 702 and simultaneously output a recommended content list 703 including at least one piece of content related to the first CP content 701.

When the first CP content 701 is history-related content, for example, the recommended content list 703 may include history-related content. In addition, the recommended content list 703 may include not only CP content of the content provider that provides the first CP content 701, but also CP content of other content providers and broadcast content received from the broadcast receiver.

Here, at least one piece of content included in the recommended content list 703 may be determined based on a keyword searched for viewing the first CP content 701. For example, if the user searches for "Hawaii travel" in order to view the first CP content 701, content included in the recommended content list 703 may be content related to Hawaii travel considering the number of views, number of subscriptions, number of likes, and whether the content has recently been updated.

Thereafter, although not shown in the figure, the display device 100 may assign selected content from the recommended content list 703 to the second channel on the basis of a control signal from the remote controller 200. Here, the second channel may correspond to content related to the first channel 702. The description thereof is as described above.

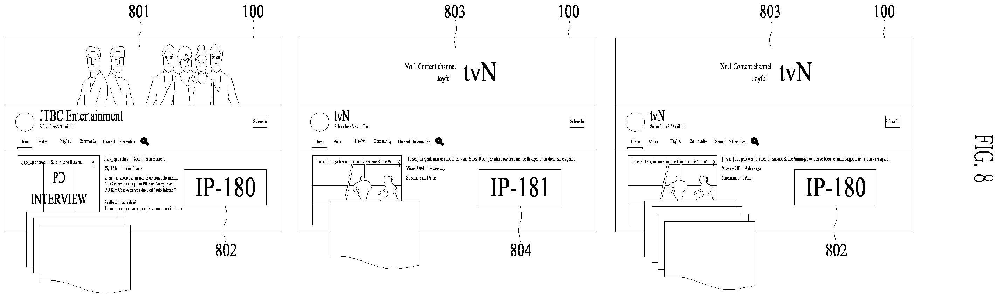

FIG. 8 is a diagram illustrating an embodiment of deleting or merging channels to which CP content has been assigned in the display device according to an embodiment of the present disclosure. Hereinafter, redundant description will be omitted.

Through the above-described embodiment, the display device 100 may assign CP content to channels. However, if lots of CP content are continuously assigned to channels, the number of channels excessively increases, making channel search difficult. To compensate for this, an embodiment of deleting channels or merging similar channels when the update frequency is low is proposed.

Referring to (a) of FIG. 8, the display device 100 may assign first CP content 801 to a first channel 802. Referring to (b) of FIG. 8, the display device 100 may assign second CP content 803 to a second channel 804. Here, since the first CP content 801 and the second CP content 803 are related to each other, the first channel 802 and the second channel 804 may correspond to consecutive numbers.

In an embodiment, the display device 100 may assign the second CP content 803 to the first channel 802 or delete the second channel 804 if the second CP content 803 assigned to the second channel 804 satisfies a first condition. Since the case of deleting the second channel 804 is simple, the case of assigning content to the first channel 802 will be described in more detail.

The display device 100 may merge the second CP content 803 to the first channel 802 if the second CP content 803 assigned to the second channel 804 satisfies the first condition. That is, when the user connects to the first channel 802 using the remote controller, the first CP content 801 and the second CP content 803 can be sequentially output. For example, the display device 100 may output the first CP content 801 and the second CP content 803 based on the update date.

Here, the first condition may include a case in which the user has not viewed the second CP content 803 for a first period (e.g., one week), a case in which the second CP content 803 has not been updated for a second period (e.g., one month), a case in which the number of views or likes of the second CP content 803 has not increased, and a case in which the second CP content 803 is a channel that has been assigned to the second channel 804 for a third period (e.g., one year).

That is, since CP content is directly uploaded from a content provider platform, the content upload speed may not be constant. In this case, since maintaining all assigned channels may be wasteful, the display device 100 may merge or delete channels under certain conditions.

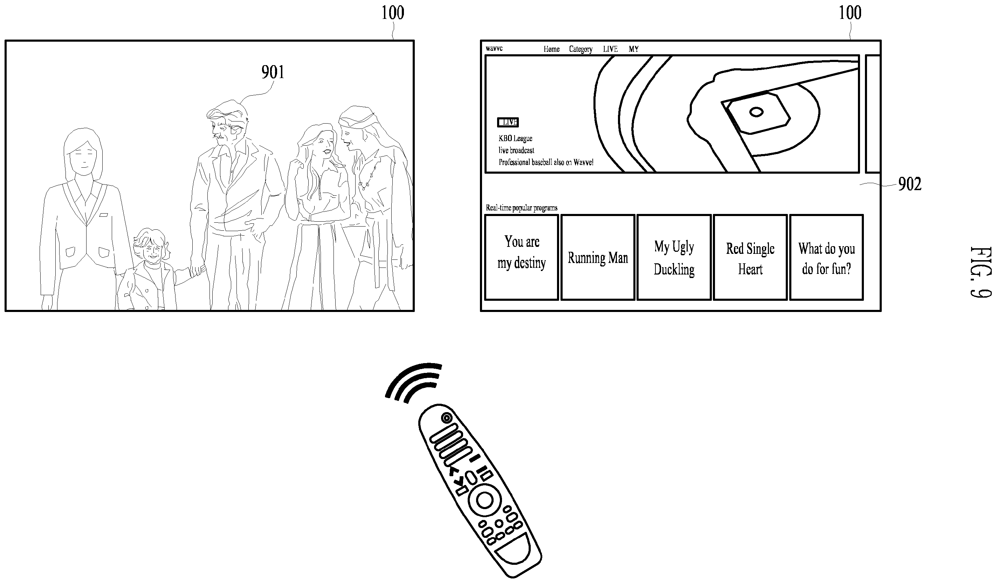

FIG. 9 is a diagram illustrating an embodiment of playing CP content on the display device according to an embodiment of the present disclosure. Hereinafter, redundant description will be omitted.

Referring to FIG. 9, after assigning first CP content 901 to a first channel, the display device 100 may receive a control signal for selecting the first channel from the remote controller 200.

At this time, the display device 100 may receive the control signal for selecting the first channel from the remote controller 200 in a turn-off state or in a state in which content assigned to another channel is being viewed.

In an embodiment of the present disclosure, if there is remaining playback time of the first CP content 901 assigned to the first channel, the first CP content 901 may be played in full screen. That is, if the user turns off the power of the display device 100 or switches channels while watching the first CP content 901, the display device 100 may record the playback time of the first CP content 901 in a memory. Accordingly, if there is remaining playback time of the first CP content 901, the display device 100 may play the first CP content 901 from the remaining time when the power is turned on or the first channel is selected.

On the other hand, if there is no remaining playback time of the first CP content 901 assigned to the first channel, the display device 100 may output a home screen 902 of the content provider. More specifically, the display device 100 may output the home screen 902 of the content provider that provided the first CP content 901. For example, if the first CP content 901 is CP content provided by Netflix, and there is no remaining playback time of the first CP content 901, the display device 100 can output the home screen of Netflix.

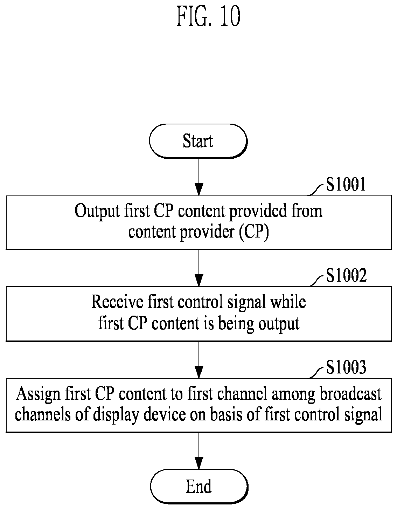

FIG. 10 is a flowchart illustrating an embodiment of assigning CP content to a broadcast channel in the display device according to an embodiment of the present disclosure. Hereinafter, redundant description will be omitted.

In step S1001, the display device may output first CP content provided from a content provider (CP).

In step S1002, the display device may receive a first control signal from the remote controller while the first CP content is being output. Here, the first control signal may correspond to a first pattern received from the remote controller. In addition, the first control signal may correspond to a signal used for a user to select a first button provided by the content provider.

In step S1003, the display device may assign the first CP content to the first channel among the broadcast channels of the display device on the basis of the first control signal.

In addition, in an embodiment, after assigning the first CP content to a first channel, second CP content related to the first CP content may be assigned to a second channel among the broadcast channels. Here, the second channel is a channel related to the first channel.

Further, in an embodiment, if there is third CP content related to the first CP content, a modal dialog for assigning the third CP content to a third channel among the broadcast channels may be output. Here, the third channel is a channel related to the first channel.

In addition, in an embodiment, the display device may receive a number of automatically recommended channel allocations set by the user. Accordingly, after assigning the first CP content to the first channel, the display device may assign at least one CP content related to the first CP content to a channel related to the first channel among the broadcast channels on the basis of the number of automatically recommended channel allocations.

In addition, in an embodiment, after assigning the first CP content to the first channel, the display device may receive a second control signal for selecting the first channel from the remote controller. Thereafter, the display device may output the first CP content on the basis of the second control signal. At this time, the display device may output a recommended content list including at least one piece of content related to the first CP content while the first CP content is being output.

Further, in an embodiment, the display device may assign second CP content to the first channel or delete a second channel if the second CP content assigned to the second channel satisfies the first condition. Here, the first condition may include a case in which the user has not viewed the second CP content for a first period and a case in which the second CP content has not been updated for a second period.

In addition, in an embodiment, after assigning the first CP content to the first channel, the display device may receive a third control signal for selecting the first channel from the remote controller. If there is remaining playback time of the first CP content assigned to the first channel, the display device may play the first CP content in full screen according to the third control signal. On the other hand, if there is no remaining playback time of the first CP content assigned to the first channel, the display device may output the home screen of the content provider.

The embodiments described above with reference to FIG. 2 to FIG. 9 can be performed in the same manner as in FIG. 10.

Accordingly, content provided by a content provider can be easily viewed, and incentives can be received from the content provider by assigning specific CP content to a preferred channel. For example, a broadcaster of a display device can request incentives from Netflix in exchange for assigning Netflix to one of its broadcast channels, channel 777.

The present disclosure may be implemented as code that can be written to a computer-readable recording medium and can thus be read by a computer. The computer-readable recording medium may be any type of recording device in which data can be stored in a computer-readable manner. Examples of the computer-readable recording medium include a hard disk drive (HDD), a solid state drive (SSD), a silicon disk drive (SDD), a ROM, a RAM, a CD-ROM, a magnetic tape, a floppy disk, optical data storage, and a carrier wave (e.g., data transmission over the Internet). In addition, the computer may include the controller. The above exemplary embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

### INDUSTRIAL APPLICABILITY

The present disclosure has industrial applicability because it can be performed repeatedly in a display device.

## Claims

1. A method of controlling a display device, comprising:
outputting first content provider (CP) content provided from a CP;
receiving a first control signal while the first CP content is being output; and
assigning the first CP content to a first channel from among broadcast channels of the display device on the basis of the first control signal.

2. The method of claim 1, comprising assigning second CP content related to the first CP content to a second channel from among the broadcast channels after assigning the first CP content to the first channel, wherein the second channel is related to the first channel.

3. The method of claim 1, comprising outputting a modal dialog for assigning third CP content related to the first CP content to a third channel from among the broadcast channels if the third CP content is present, wherein the third channel is related to the first channel.

4. The method of claim 1, comprising:
receiving a number of automatically recommended channel allocations from a user; and
assigning at least one CP content related to the first CP content to a channel related to the first channel from among the broadcast channels on the basis of the number of automatically recommended channel allocations after assigning the first CP content to the first channel.

5. The method of claim 1, comprising:
receiving a second control signal for selecting the first channel from a remote controller after assigning the first CP content to the first channel;
outputting the first CP content on the basis of the second control signal; and
outputting a recommended content list including at least one piece of content related to the first CP content while the first CP content is being output.

6. The method of claim 2, comprising assigning the second CP content to the first channel or deleting the second channel if the second CP content assigned to the second channel satisfies a first condition, wherein the first condition includes a case in which a user has not viewed the second CP content for a first period and a case in which the second CP content has not been updated for a second period.

7. The method of claim 1, comprising:
receiving a third control signal for selecting the first channel from a remote controller after assigning the first CP content to the first channel;
playing the first CP content in full screen if there is a remaining playback time of the first CP content assigned to the first channel; and
outputting a home screen of the content provider when there is no remaining playback time of the first CP content assigned to the first channel.

8. The method of claim 1, wherein the first control signal is a first pattern received from a remote controller.

9. The method of claim 1, wherein the first control signal is a signal used for a user to select a first button provided by the content provider.

10. A display device comprising:
a communication unit configured to communicate with a remote controller;
a display module configured to output content; and
a controller,
wherein the controller is configured to:
output a first CP content provided from a content provider (CP) through the display module;
receive a first control signal from the remote controller while the first CP content is being output; and
assign the first CP content to a first channel from among broadcast channels of the display device on the basis of the first control signal.
